# FASCICULE DE BREVET EUROPEEN

(11) **EP 3 948 046 B1**
(45) Date de publication et mention de la délivrance du brevet: **18.01.2023**
(21) Numéro de dépôt: 20715082.2
(22) Date de dépôt: 03.04.2020
(51) Int. Cl.: F16L 37/248

(54) **DISPOSITIF D'ASSEMBLAGE DE DEUX CONDUITS, LIGNE DE CIRCULATION FLUIDIQUE ET VÉHICULE COMPORTANT UN TEL DISPOSITIF**
VORRICHTUNG ZUM MONTIEREN ZWEIER ROHRE, FLUIDZIRKULATIONSLEITUNG UND FAHRZEUG MIT EINER SOLCHEN VORRICHTUNG
DEVICE FOR ASSEMBLING TWO PIPES, FLUID CIRCULATION LINE AND VEHICLE COMPRISING SUCH A DEVICE

(30) Priorité: 05.04.2019 FR 1903651
(43) Date de publication de la demande: 09.02.2022
(73) Titulaire: Sogefi Air & Cooling (SAS), 78280 Guyancourt (FR)
(72) Inventeur: BECKER, Nicolas, 68320 PORTE-DU-RIED (FR); KREIDER, Julien, 68360 SOULTZ (FR)
(74) Mandataire: Cabinet Nuss
(86) Numéro de dépôt international: PCT/EP2020/059490
(87) Numéro de publication internationale: WO 2020/201474

(56) Documents cités:
- EP-A1- 1 213 472
- DE-U- 1 880 180
- US-A- 383 360

## Description

La présente invention concerne le domaine du raccordement d'éléments tubulaires soumis à une circulation traversante de fluide, gazeux ou liquide, en particulier dans un contexte d'équipements de véhicules automobiles, et avantageusement dans une application d'assemblage ou de raccordement mutuel de conduits ou de parties de conduits, du type conduits d'air sous pression, conduits de liquide de refroidissement ou analogues.

L'invention a plus spécifiquement pour objets un dispositif pour l'assemblage ou la connexion mutuel(le) de deux conduits ou de deux parties de conduit, une ligne de circulation fluidique intégrant au moins un tel dispositif et un véhicule automobile comprenant au moins une telle ligne.

De nombreux types de systèmes et dispositifs de raccordement étanche de conduits sont déjà connus dans l'état de la technique.

Dans la plupart des cas, il s'agit de raccordements mécaniques mâle/femelle étanchéifiés à l'aide d'au moins un joint interposé et/ou par compression de l'un des conduits.

Typiquement, ces raccordements sont verrouillés par l'intermédiaire d'un moyen de verrouillage séparé, tel qu'un collier (cf. par exemple FR 2 789 148) ou une agrafe (cf. par exemple US 4 884 829), qui participe généralement aussi à l'obtention de l'étanchéité. L'assemblage nécessite par conséquent au moins deux opérations successives et met en œuvre au moins une pièce additionnelle.

En variante, il existe également de nombreuses réalisations de raccordements étanches entre conduits comprenant des systèmes d'assemblage intégrés dits « à baïonnette », dans lesquels l'un des deux conduits présente un ou des ergot(s) ou doigt(s) saillant(s), et l'autre conduit comporte un ou des chemins de circulation, avec chacun un point d'entrée et un point d'arrivée, parcouru(s) par ledit au moins un ou chaque ergot ou doigt durant les mouvements d'assemblage mutuels des deux conduits, l'état d'assemblage final étant obtenu lorsque le(s) point(s) d'arrivée est(sont) atteint(s). Dans cet état, les deux conduits sont assemblés rigidement et sans jeu, généralement sous l'action d'une sollicitation ressort ou élastique ou d'un organe de verrouillage (cf. par exemple: US 7 681 925, WO 2013/051933, WO 2012/077654, US 383360 et EP 1213472). Les chemins de circulation consistent en des découpes ou des fentes ménagées dans la paroi du conduit ou de l'embout concerné et débouchant au niveau de son bord d'extrémité, fragilisant structurellement ce dernier. De plus, dans ces réalisations connues de systèmes à baïonnettes, les moyens de verrouillage en configuration d'assemblage final sont des moyens additionnels spécifiques, le cas échéant rapportés (non intégrés). En outre, les efforts nécessaires pour aboutir à l'état assemblé sont importants, rendant l'opération pénible en cas de répétition multiple par un opérateur.

Le document DE 1880180 U divulgue aussi un système d'assemblage à baïonnettes du type précité, avec les limitations évoquées, notamment une découpe débouchant au niveau du bord et un organe de verrouillage ressort rapporté. En outre, pour aboutir à la position finale de verrouillage, il y a lieu d'effectuer trois mouvements/déplacements distincts, puisque le chemin de circulation présente une forme en U avec trois segments non alignés. De plus, ce document évoque la nécessité de réaliser certaines éléments constitutifs en métal.

On connaît également, par exemple par les documents US 9 388 921, US 2009/072494 et US 3 385 367, des systèmes de connexion étanche entre conduits mettant en œuvre des pièces de raccordement tubulaires séparées, emboîtées simultanément sur et/ou dans les deux conduits à relier fluidiquement. Il en résulte une double liaison au niveau de chaque zone de connexion, chaque liaison devant être étanchée et réalisée spécifiquement.

Or, dans le cadre de certaines applications, notamment dans le domaine automobile, les liaisons fluidiques par l'intermédiaire de conduits ou de tuyaux nécessitent un certain degré de flexibilité et d'adaptabilité géométriques, en particulier pour « absorber » ou « ajuster » les jeux de montage, plus spécifiquement lorsque les organes ou composants à relier sont fixes. Néanmoins, cette possibilité de libre adaptation et de souplesse dans le montage doit être encadrée pour ne pas compromettre l'étanchéité, ni l'assemblage mécanique, et également pour limiter les possibilités de mouvements relatifs entre conduits dans un environnement contraint, tout en réalisant si possible une liaison résistante et rigide.

Tel est notamment le cas, à titre d'exemple, dans les circuits de circulation d'air ou d'eau dans les environnements moteurs des véhicules automobiles, lesquels sont souvent réalisés au moyen de tuyaux flexibles (tels que les « durites ») dont les assemblages sont verrouillés par des colliers.

Le problème posé à l'invention consiste par conséquent à fournir un dispositif de connexion ou d'assemblage entre deux conduits permettant de surmonter au moins les inconvénients majeurs précités, ne mettant en œuvre aucune pièce séparée rapportée, ne compromettant pas l'intégrité structurelle au niveau des bords à assembler et présentant une flexibilité ciblée autorisant un ajustement contrôlé pour s'accommoder des jeux de montage, ce tout en réalisant fiablement un assemblage étanche et mécaniquement rigide, ne nécessitant que des efforts de montage limités.

En outre, ce dispositif de connexion devrait pouvoir compenser les jeux et tolérances liés aux phénomènes de dilatation thermique, notamment dans un environnement de moteur à combustion interne, et si possible pouvoir absorber les vibrations, le cas échéant déphasées et/ou opposées, auxquelles peuvent être soumis les organes ou modules reliés par ces conduits.

A cet effet, l'invention a pour objet un dispositif d'assemblage ou de connexion de deux conduits dont un premier est pourvu d'une portion d'extrémité mâle et le second d'une portion d'extrémité femelle,
ces deux portions d'extrémité tubulaires à section circulaire étant configurées pour s'assembler entre elles par emboîtement avec réalisation simultanée d'une liaison mécanique et d'une étanchéité aux gaz et/ou aux liquides, et avec alignement mutuel selon une direction axiale,
ces deux portions d'extrémité comprenant des premiers moyens respectifs mutuellement coopérants dévolus à l'établissement par translation et rotation d'une liaison mécanique verrouillée et des seconds moyens respectifs mutuellement coopérants dévolus à l'établissement d'une liaison étanche par compression d'au moins un joint contre au moins une surface de contact à l'état verrouillé de la liaison mécanique,
la portion d'extrémité mâle comportant au moins un pion ou ergot de verrouillage d'un seul tenant avec sa paroi et saillant radialement vers l'extérieur, et la paroi de la portion d'extrémité femelle intégrant un chemin de circulation apte et destiné à guider le ou chaque pion, lors du mouvement d'emboîtement, jusqu'à un logement de réception avec verrouillage,
dispositif d'assemblage caractérisé
en ce qu'une partie élastiquement déformable de la paroi de la portion d'extrémité femelle, qui correspond à un segment terminal du chemin de circulation guidée, constitue un organe de blocage du pion dans son logement de réception,
en ce que le logement de réception consiste en un ajour dans la paroi de la portion d'extrémité femelle, avec une dimension dans la direction axiale supérieure à celle du pion ou ergot, et
en ce que le chemin de circulation guidée comprend, depuis le bord libre de la portion d'extrémité femelle, un premier segment à extension axiale correspondant à un creusement, à un renfoncement ou à une déformation vers l'extérieur de la paroi de cette portion, puis un second segment contigu, sous la forme d'une découpe de ladite paroi délimitant la partie de paroi élastiquement déformable définissant une aile, cette découpe s'étendant transversalement par rapport au premier segment et débouchant dans l'ajour formant le logement de réception avec verrouillage, et l'étanchéité étant réalisée quelle que soit la position axiale du pion dans le logement de réception.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1A] et
[Fig. 1B] sont des vues en perspective respectivement à l'état éclaté et à l'état assemblé d'une ligne de circulation fluidique comprenant un dispositif d'assemblage selon un premier mode de réalisation de l'invention ;
[Fig. 2] est une vue en perspective d'une ligne de circulation fluidique avant assemblage des deux conduits la constituant par l'intermédiaire d'un dispositif en accord avec un premier mode de réalisation de l'invention ;
[Fig. 3A] et
[Fig. 3B] sont des vues partielles de détail à une échelle différente illustrant le positionnement des deux composantes du dispositif d'assemblage des figures 1 et 2 en début et en fin de mouvement d'emboîtement ;
[Fig. 4A],
[Fig. 4B],

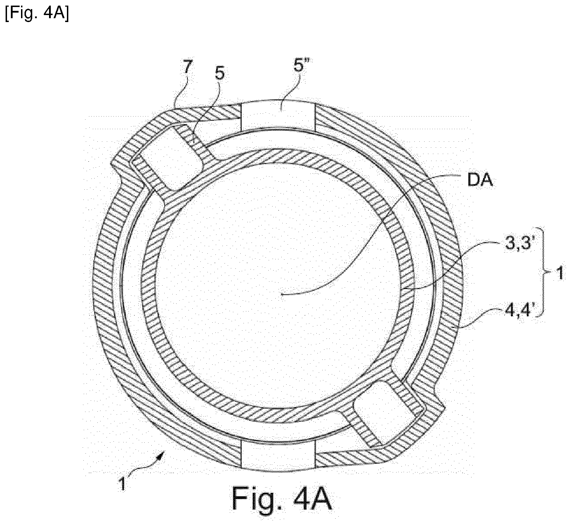

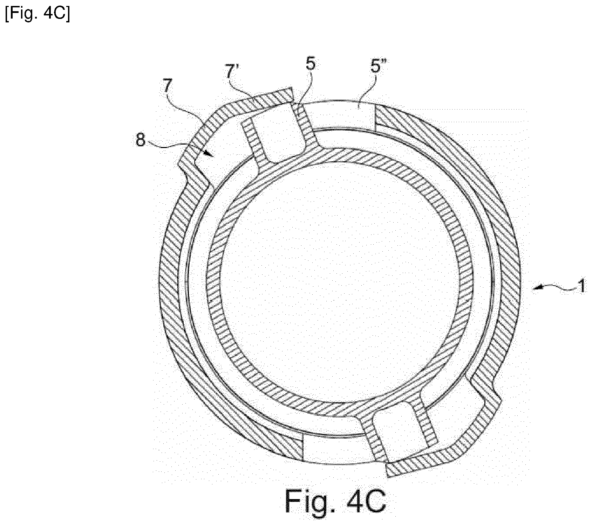

[Fig. 4C] et

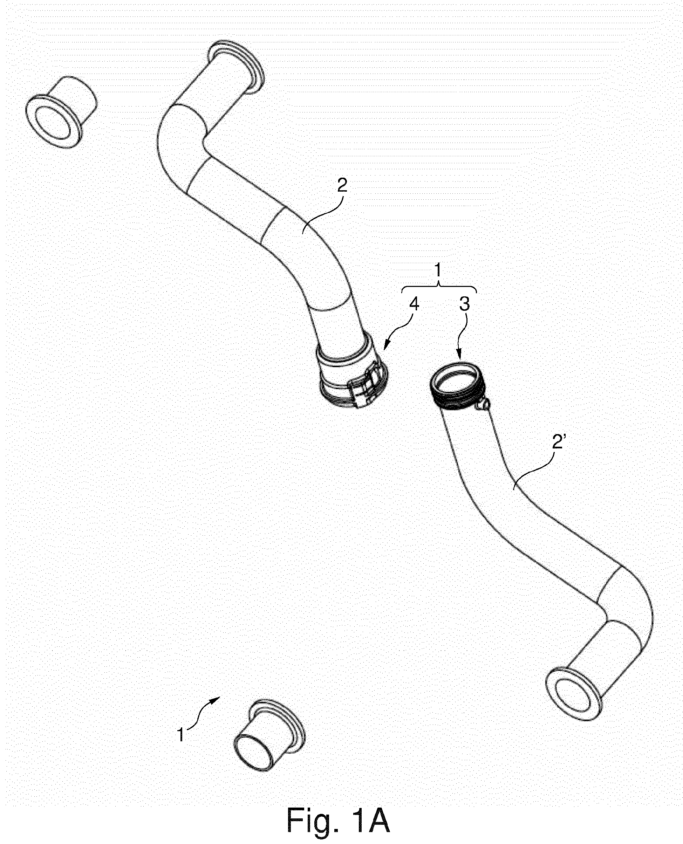

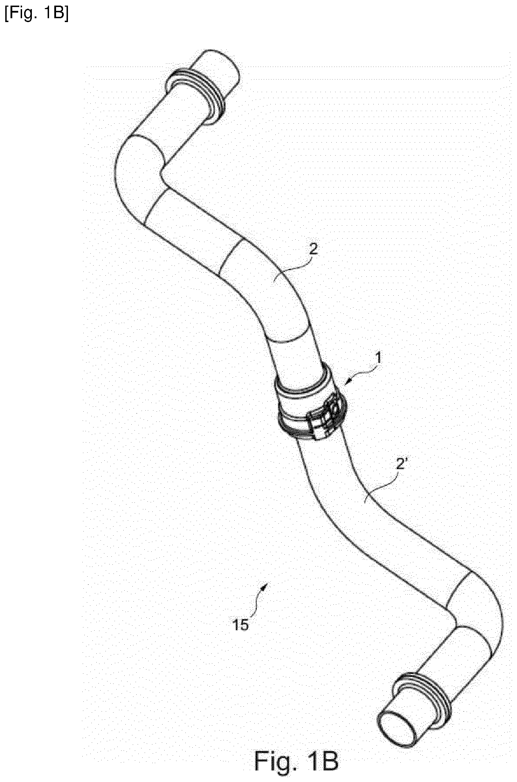

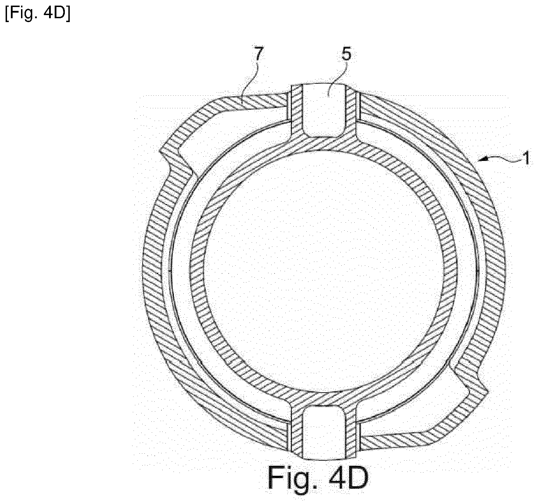

[Fig. 4D] sont des vues en coupe selon des plans perpendiculaires à la direction axiale du dispositif d'assemblage des figures 1 à 3 illustrant quatre phases consécutives du mouvement d'emboîtement aboutissant à l'assemblage des deux conduits par l'intermédiaire du dispositif selon l'invention ;

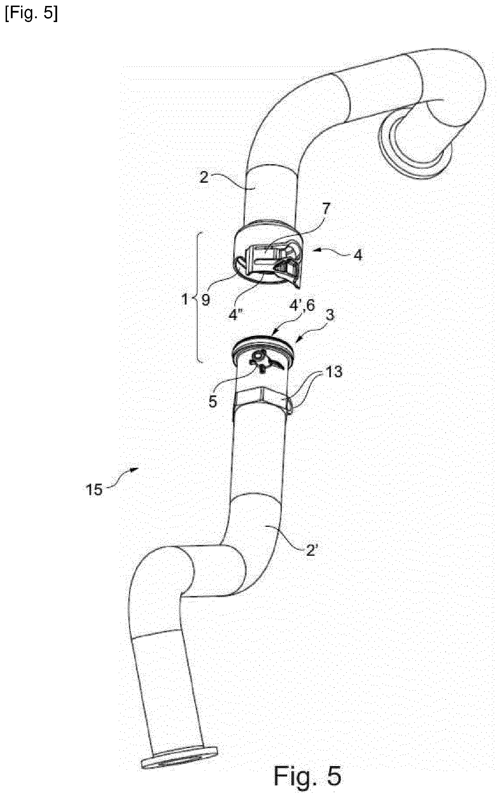

[Fig. 5] est une vue en perspective d'une ligne de circulation fluidique comprenant un dispositif d'assemblage selon un second mode de réalisation de l'invention, avant connexion mutuelle des deux conduits la constituant par l'intermédiaire du dispositif d'assemblage ;

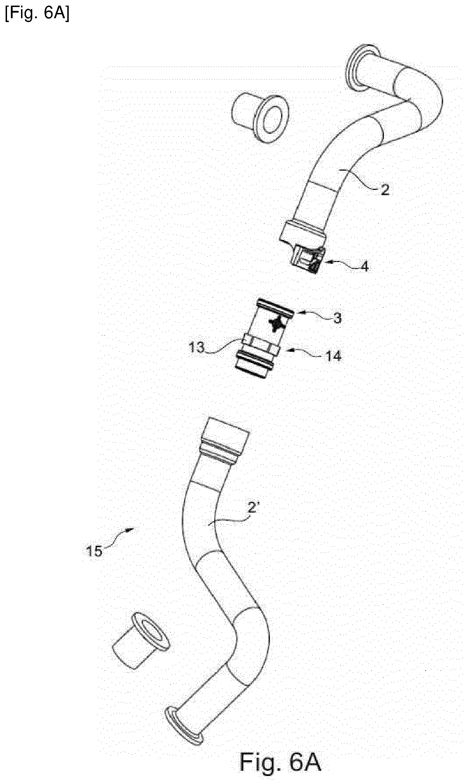

[Fig. 6A] et

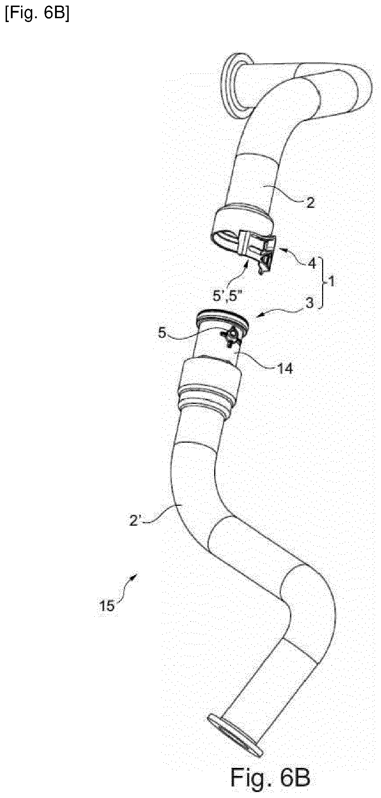

[Fig. 6B] sont des vues en perspective d'une ligne de circulation fluidique comprenant une variante du second mode de réalisation du dispositif selon l'invention, à l'état éclaté et avant assemblage par emboîtement ;

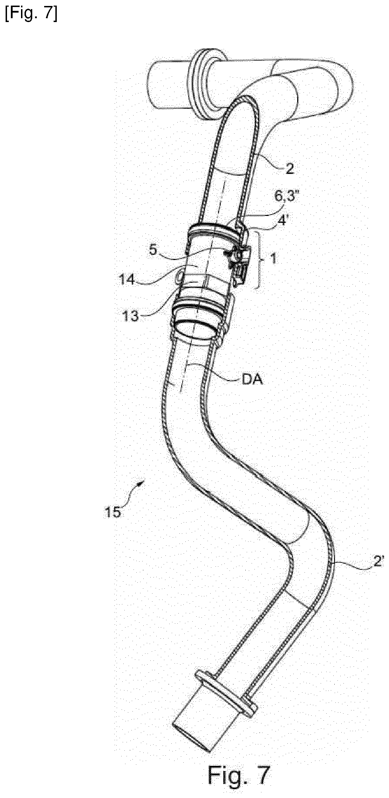

[Fig. 7] est une vue en coupe partielle de la ligne de circulation fluidique des figures 6A et 6B, les deux composantes du dispositif d'assemblage étant en cours d'emboîtement ;
[Fig. 8A],
[Fig. 8B],

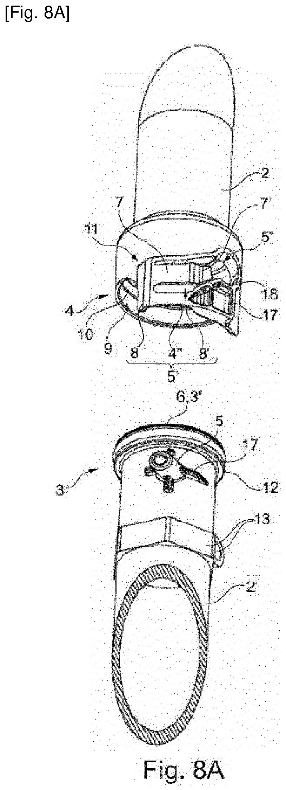

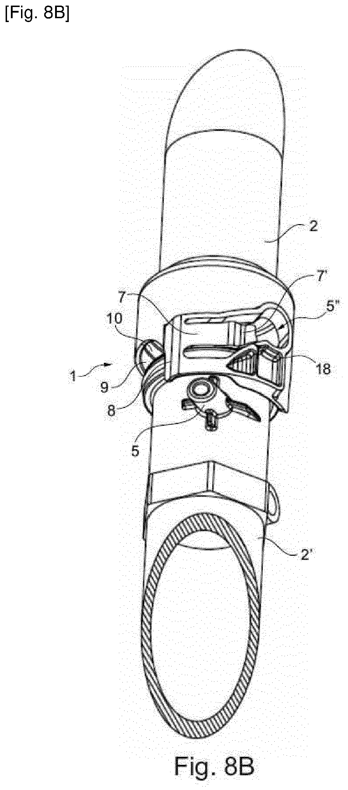

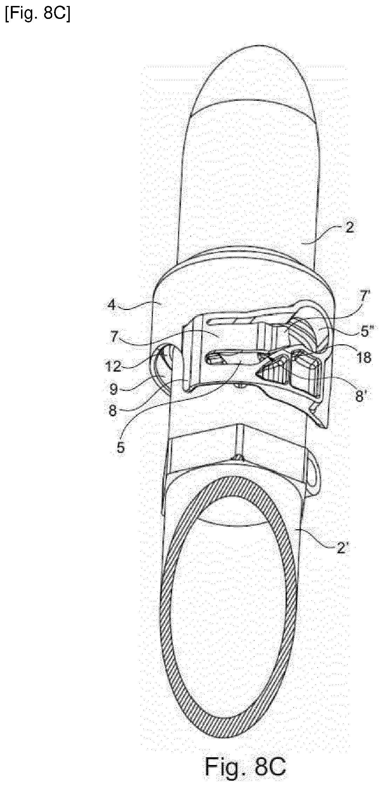

[Fig. 8C] et

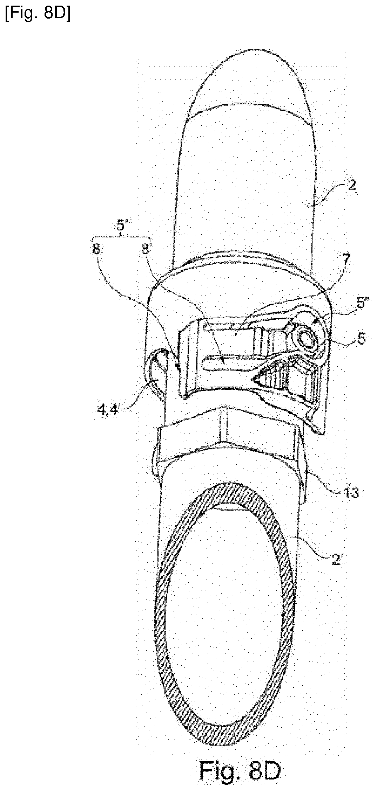

[Fig. 8D] sont des vues partielles à une échelle différente illustrant quatre phases successives de l'opération de connexion des deux conduits de la ligne de circulation représentée sur la figure 5 par l'intermédiaire du dispositif selon l'invention ;

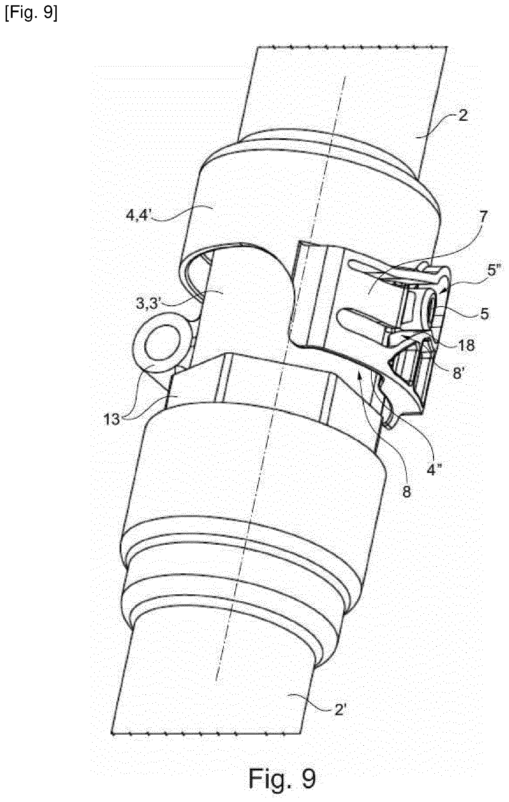

[Fig. 9] est une vue partielle en perspective à une échelle différente de la variante de réalisation représentée sur la figure 7 ;
[Fig. 10A],
[Fig. 10B],
[Fig. 11A],
[Fig. 11B],

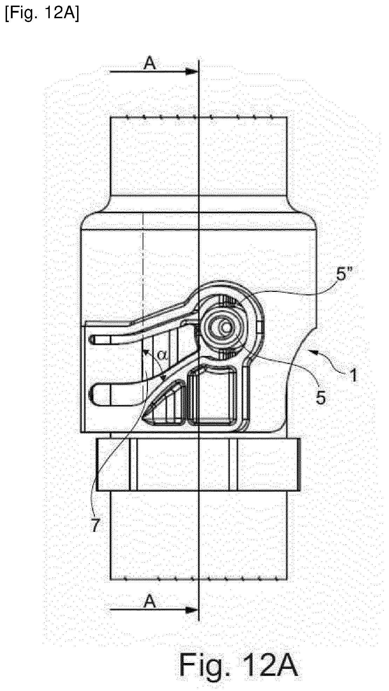

[Fig. 12A] et

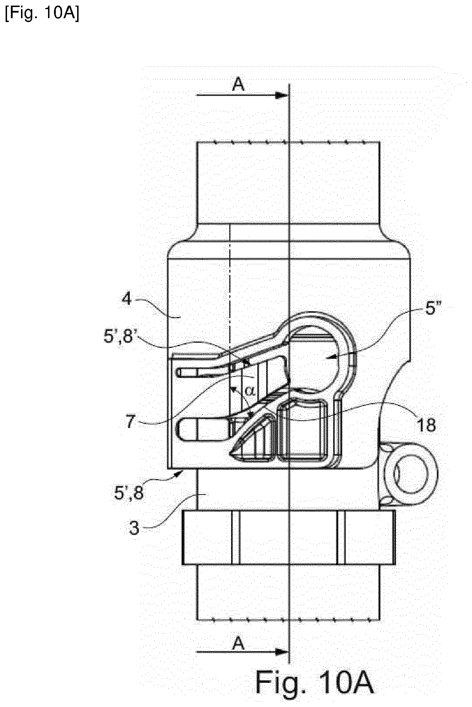

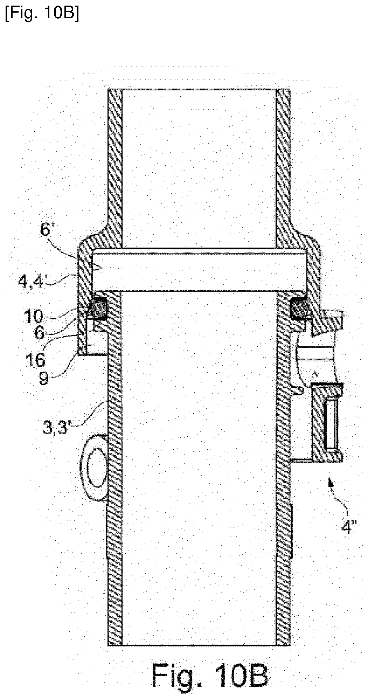

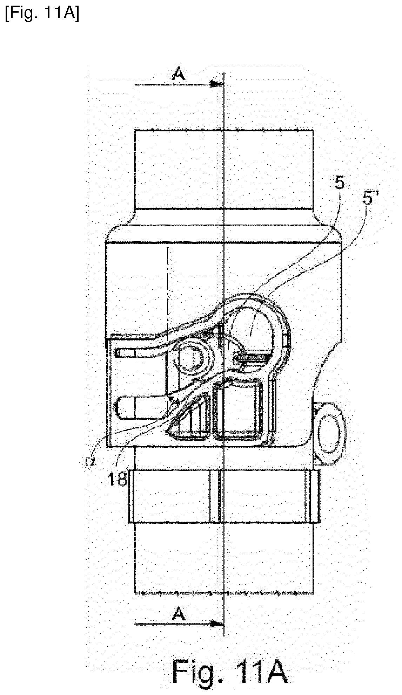

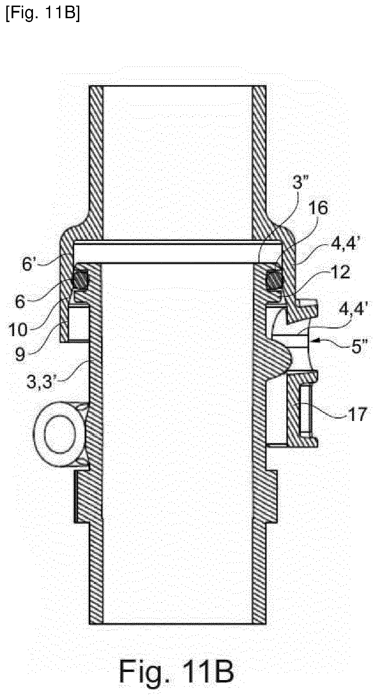

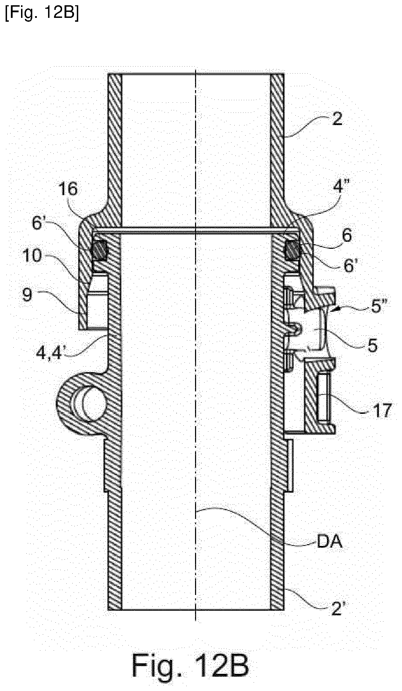

[Fig. 12B] illustrent trois phases successives du mouvement d'emboîtement des deux composantes du dispositif d'assemblage en accord avec le second mode de réalisation, les figures 10A, 11A et 12A étant des vues en élévation et les figures 10B, 11B et 12B étant respectivement des vues en coupe selon A-A des objets représentés sur lesdites figures 10A, 11A et 12A ;
[Fig. 13A],

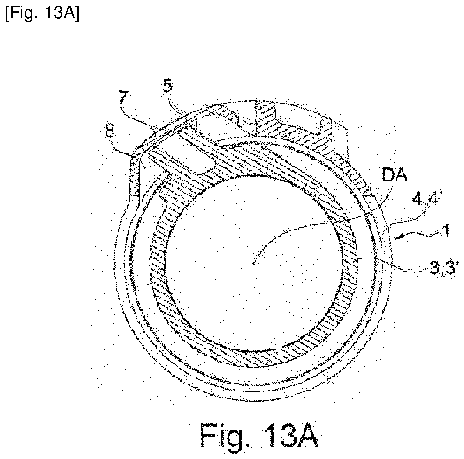

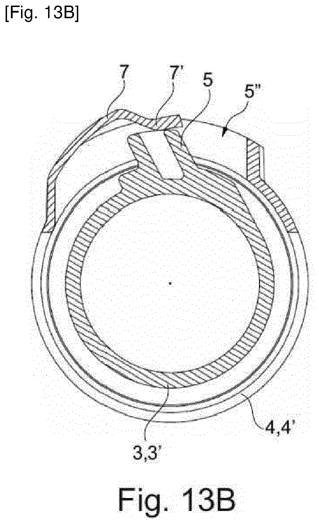

[Fig. 13B] et

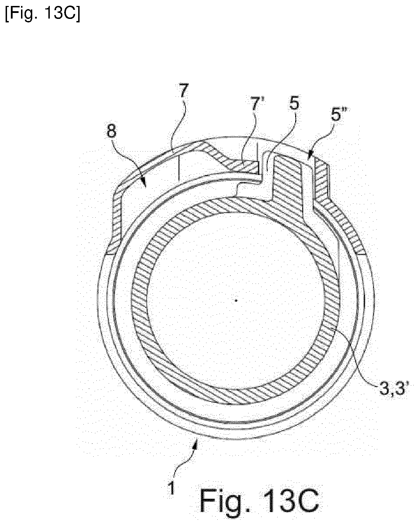

[Fig. 13C] sont des vues en coupe selon des plans perpendiculaires à la direction axiale du dispositif d'assemblage des figures 5 à 7 illustrant trois phases consécutives du mouvement d'emboîtement aboutissant à l'assemblage des deux conduits par l'intermédiaire du dispositif selon l'invention, et,

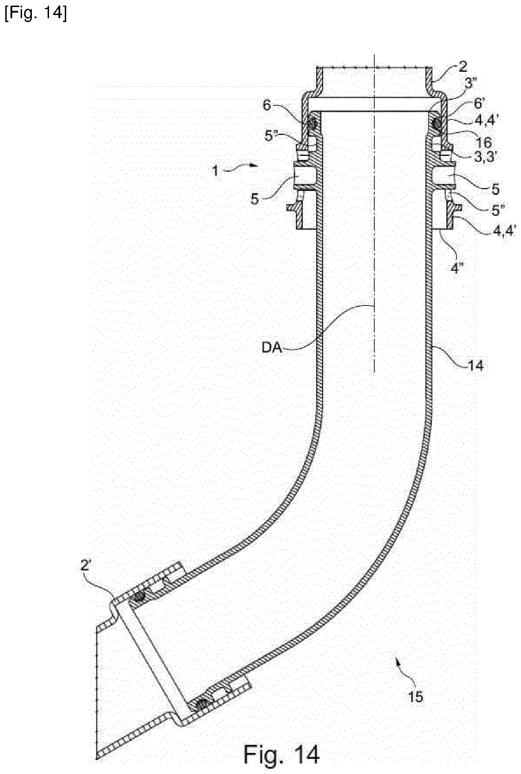

[Fig. 14] est une vue partielle en coupe selon un plan axial d'une ligne de circulation fluidique selon une autre variante de réalisation de l'invention.

Les figures 1 à 13 illustrent, au moins partiellement pour certaines, un dispositif 1 pour l'assemblage ou la connexion de deux conduits 2, 2' entre eux, dont un premier est pourvu d'une portion d'extrémité mâle 3 et le second d'une portion d'extrémité femelle 4 (d'un seul tenant ou rapportées).

Ces deux portions d'extrémité tubulaires (3 et 4 à section circulaire sont configurées pour s'assembler entre elles par emboîtement avec réalisation simultanée d'une liaison mécanique et d'une étanchéité aux gaz et/ou aux liquides, et avec alignement mutuel selon une direction axiale DA.

Ces deux portions d'extrémité comprennent des premiers moyens respectifs 5, 5', 5" mutuellement coopérants et dévolus à l'établissement par translation et rotation d'une liaison mécanique verrouillée et des seconds moyens respectifs 6, 6' mutuellement coopérants et dévolus à l'établissement d'une liaison étanche par compression d'au moins un joint 6 contre au moins une surface de contact 6' à l'état verrouillé de la liaison mécanique.

La portion d'extrémité mâle 3 comporte au moins un pion ou ergot 5 de verrouillage d'un seul tenant avec sa paroi 3' et saillant radialement vers l'extérieur, et la paroi 4' de la portion d'extrémité femelle 4 intègre un chemin de circulation 5' apte et destiné à guider le ou chaque pion 5, lors du mouvement d'emboîtement, jusqu'à un logement 5" de réception avec verrouillage.

Lors du mouvement d'emboîtement, le chemin de circulation guidée 5' impose avantageusement une composante de déplacement en translation selon la direction axiale DA et une composante de déplacement en rotation autour de cette direction.

Ainsi, on aboutit à une liaison mécanique du type baïonnette entre les deux portions de conduits mâle 3 et femelle 4 avec réalisation simultanée d'une étanchéité lorsque la connexion est verrouillée.

Conformément à l'invention, le logement de réception 5" consiste en un ajour dans la paroi 4' de la portion d'extrémité femelle 4, avec une dimension dans la direction axiale DA supérieure à celle du pion ou ergot 5, et une partie 7 élastiquement déformable de la paroi 4' de la portion d'extrémité femelle 4, correspondant à un segment terminal du chemin 5' de circulation guidée, constitue un organe de blocage du pion 5 dans son logement de réception 5", l'étanchéité étant réalisée quelle que soit la position axiale du pion 5 dans ce dernier (dans les exemples représentés, le joint 6 demeure en contact avec compression sur la surface 6').

Grâce à ces dispositions, la liaison d'assemblage entre les deux portions 3 et 4 se trouve automatiquement verrouillée en fin de mouvement d'emboîtement, avec blocage du ou de chaque pion 5 dans son logement 5", tout en autorisant un mouvement relatif et limité dudit pion 5 dans ledit logement 5", par exemple du type oblong, dans la direction DA au moins. De ce fait, un déplacement axial relatif limité entre les deux portions 3 et 4, et le cas échéant entre les deux conduits 2 et 2' reliés, est possible, malgré une structure rigide desdites portions.

Les premiers moyens 5, 5', 5", ainsi que l'organe de blocage/verrouillage automatique 7, étant tous intégrés dans l'une des deux portions d'extrémité 3 ou 4, c'est-à-dire réalisés d'un seul tenant avec et préférentiellement dans le même matériau que les parois de ces dernières, aucune pièce supplémentaire n'est nécessaire pour établir la liaison mécanique, ni pour la verrouiller.

En outre, le guidage du mouvement d'emboîtement par le chemin 5' permet de limiter les efforts nécessaires à l'assemblage et de garantir la bonne exécution dudit mouvement en le contrôlant.

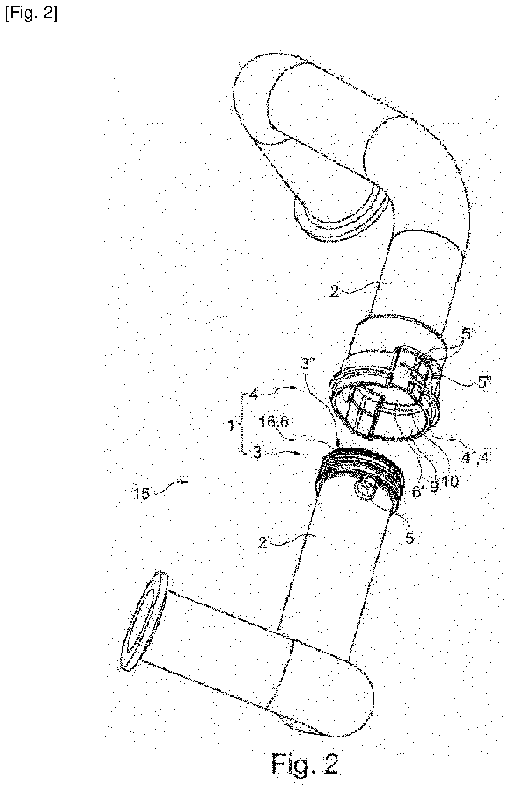

Toujours en accord avec l'invention, et comme illustrée sur les figures 2, 3, 5 et 8 à 12 notamment, le chemin 5' de circulation guidée comprend, depuis le bord libre 4" de la portion d'extrémité femelle 4, un premier segment 8 à extension axiale correspondant à un creusement, à un renfoncement ou à une déformation vers l'extérieur de la paroi 4' de cette portion 4, puis un second segment 8' contigu, sous la forme d'une découpe de ladite paroi délimitant une partie de paroi 7 élastiquement déformable définissant une aile, cette découpe 8' s'étendant transversalement par rapport au premier segment 8 et débouchant dans l'ajour 5" formant le logement de réception avec verrouillage. Le chemin 5', et plus particulièrement son segment terminal 8', peut avantageusement se rétrécir progressivement en direction du logement 5".

Ainsi, le chemin de guidage 5' du pion 5, réalisé dans la paroi 4', comprend tout d'abord une gorge 8 imposant un mouvement de translation le long de la direction axiale DA, puis une découpe 8' imposant un mouvement de rotation pure ou un mouvement combiné de translation et de rotation.

On peut noter que l'entrée de la gorge 8 formant le premier segment du chemin 5', située au niveau du bord libre 4" de la paroi 4' de la portion d'extrémité femelle 4, est décalée axialement et angulairement par rapport au logement de réception 5".

On peut également relever que la réalisation du premier segment 8 (débutant au niveau du bord de la portion d'extrémité femelle 4) sous l'une des formes évoquées ci-dessus permet de préserver la continuité et l'intégrité de la paroi 4' au niveau de son bord et ce sur toute sa périphérie (pas d'interruption de la région du bord du fait d'une découpe ou d'une fente par exemple), et donc de conserver une bonne rigidité et une bonne résistance mécanique à cet endroit.

De manière additionnelle, il peut être prévu selon l'invention et comme le montrent les figures, la paroi 4' de la portion 4 comporte le long du second segment 8 et autour du logement 5" des épaississements de matière ou des nervures de renforcement, qui augmentent localement la rigidité et les surfaces de contact avec le pion 5.

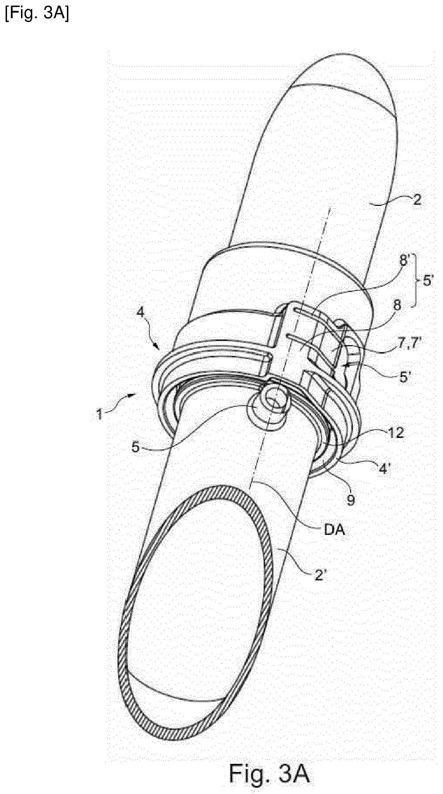

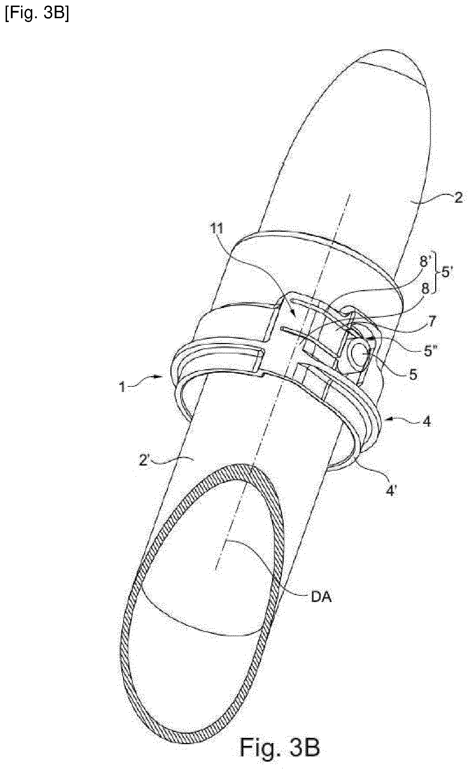

Comme le montrent notamment les figures 3, 8, 10 et 11, le logement 5" de réception et de rétention du pion 5 en configuration finale d'assemblage est situé dans la continuité et dans l'alignement du second segment 8'du chemin 5' et forme en fait la portion terminale dudit chemin. Par conséquent, seuls deux mouvements (avec des directions différentes) sont nécessaires pour réaliser l'assemblage verrouillé (trajectoire en L, ou selon deux segments de droite consécutifs avec un angle de plus de 90°entre eux, du pion 5). De plus, seule la seconde partie de ce mouvement s'effectue à l'encontre d'une résistance élastique (déformation vers l'extérieur de l'aile 7), le premier mouvement axial du pion 5 étant simplement guidé par le premier segment 8 du chemin 5.

En vue de permettre une plus grande flexibilité de l'assemblage sans compromettre la fiabilité du verrouillage de la liaison mécanique entre les deux portions d'extrémité 3 et 4, il peut éventuellement être prévu que le logement de réception 5" du ou de chaque pion 5 présente également une dimension supérieure à celle du pion 5 concerné dans une direction perpendiculaire à la direction axiale DA (une rotation limitée entre les deux portions 3 et 4 autour de DA est alors possible).

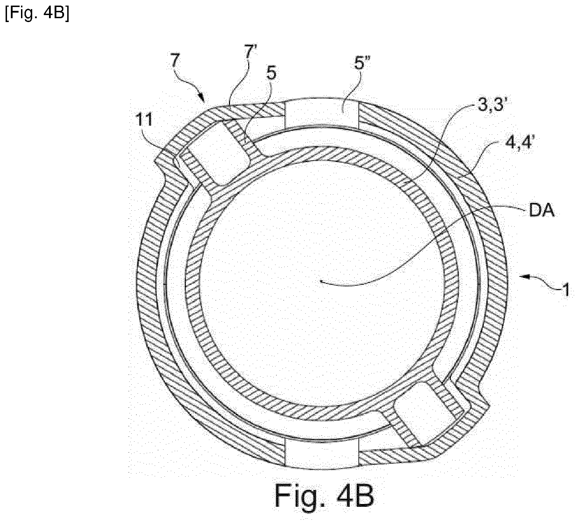

Préférentiellement, et comme le montrent par exemple les figures 4B, 4C et 13B, au moins une partie 7' de l'aile 7, préférentiellement proche de son extrémité libre, s'étend autour de la direction axiale DA ou est située sur un cercle interférant avec le pion 5 considéré, de telle manière qu'elle subit une poussée vers l'extérieur lors du déplacement du pion 5 le long du second segment ou segment terminal 8' du chemin de circulation 5' vers le logement de réception 5", entraînant une déformation élastique de ladite aile 7.

Selon un premier mode de réalisation de l'invention, illustré sur les figures 1 à 4, les deux segments 8 et 8' du chemin de circulation guidée sont mutuellement perpendiculaires et forment un L (vu en élévation frontale), le second segment 8' formant un arc de cercle.

Selon un second mode de réalisation préféré de l'invention, illustré sur les figures 5 à 13, le second segment 8' du chemin de circulation guidée 5' forme un angle α inférieur à 90° par rapport à la direction axiale DA (vue dans le sens de l'emboîtement de 3 dans 4), en constituant préférentiellement un segment de guidage hélicoïdal autour de ladite direction axiale DA. Le bord de la découpe 8' forme ainsi une rampe 18 (préférentiellement sensiblement droite) débouchant dans le logement 5", cette rampe présentant une inclinaison positive (par exemple entre 10° à 25°) par rapport à un plan transversal à DA dans la direction d'emboîtement (les axes centraux des portions d'extrémité 3 et 4 sont confondus avec DA à l'état assemblé des deux portions).

En accord avec une caractéristique constructive préférée, et comme le montrent par exemple les figures 2, 10B, 11B et 12B, la face interne de la paroi 4' de la portion d'extrémité femelle 4 comprend deux régions consécutives 9, 6' selon la direction axiale DA, à savoir, d'une part, une région extérieure 9 dont le diamètre est sensiblement identique ou supérieur au diamètre extérieur d'un joint d'étanchéité 6 porté ou formé sur le bord libre 3" de la paroi 3' de la portion d'extrémité mâle 3 et, d'autre part, une région intérieure 6' dont le diamètre est inférieur au diamètre extérieur dudit joint 6 et avec laquelle un contact étanche est réalisé lorsque le bord libre 3" de la paroi 3' de la portion d'extrémité mâle 3 est situé dans cette région intérieure 6', ces deux régions tubulaires 9, 6' étant séparées par une troisième région annulaire 10 inclinée formant biseau ou tronc de cône.

Il peut alors être prévu, en relation avec le premier mode de réalisation précité, que les portions d'extrémité mâle 3 et femelle 4 soient configurées de telle manière que le joint d'étanchéité 6 soit positionné au niveau de la troisième région annulaire biseautée 10 lorsque le pion 5 est situé à une distance déterminée de l'extrémité du premier segment 8 du chemin de circulation guidée 5' contigüe avec le second segment ou segment terminal 8'.

En variante, il peut être prévu, en relation avec le second mode de réalisation précité, que les portions d'extrémité mâle 3 et femelle 4 soient configurées de telle manière que le joint d'étanchéité 6 soit positionné au niveau de la troisième région annulaire biseautée 10 lorsque le pion 5 est situé dans la région angulaire de transition 11 reliant les premier et second segments 8 et 8' du chemin de circulation guidée 5' de la portion d'extrémité femelle 4.

Le mouvement d'assemblage par emboîtement comporte ainsi une première phase opératoire nécessitant peu d'effort, et une seconde phase requérant un effort plus intense.

Dans le cadre du second mode de réalisation, la fourniture d'une rampe 18 (bord 18 de la découpe formant le segment hélicoïdal terminal 8' du chemin 5') permet de soulager l'opérateur en l'accompagnant positivement dans son mouvement.

De manière avantageuse, et en vue de fournir des degrés de liberté additionnels à la liaison d'assemblage entre les deux portions 3 et 4, sans compromettre l'étanchéité, la partie de la portion d'extrémité mâle 3 emboîtée dans la portion d'extrémité femelle 4 peut présenter un diamètre extérieur inférieur au diamètre intérieur de cette dernière et comporte une nervure externe 12 déterminant un angle maximum de rotulage entre ces deux portions 3 et 4. Un mouvement de rotulage est ainsi autorisé, mais de manière parfaitement contrôlée et précisément limitée.

Comme le montrent les figures 1 et 5 à 13, le dispositif 1 peut comprendre un unique ensemble de premiers moyens coopérants [pion 5/logement de réception 5"].

Comme le montrent les figures 2, 4 et 14, le dispositif peut, de manière alternative et pour assurer un assemblage plus symétrique et plus résistant, comprendre avantageusement au moins deux ensembles de premiers moyens coopérants [pion 5/logement de réception 5"], répartis régulièrement autour de la direction axiale DA (préférentiellement deux ensembles opposés).

Pour faciliter davantage encore l'exécution du mouvement d'emboîtement, la portion d'extrémité mâle 3 au moins, et éventuellement également la portion d'extrémité femelle 4, comporte au moins un site ou une formation d'accrochage 13 pour un outil de manipulation, en particulier adapté pour un entraînement en rotation autour de la direction axiale DA. Ainsi, l'effort nécessaire à la mise en rotation du conduit 2' ou de l'embout 14, lors du parcours du second segment 8' du chemin de guidage 5' par le pion 5, sera nettement diminué pour l'opérateur.

En accord avec une première construction possible, la portion d'extrémité mâle 3 et/ou la portion d'extrémité femelle 4 est (sont) formée(s) d'un seul tenant avec un conduit tubulaire correspondant 2, 2' (cf. figures 1, 2 et 5).

En accord avec une seconde construction possible, la portion d'extrémité femelle 4 et/ou la portion d'extrémité mâle 3 fait(font) partie d'au moins un embout de raccordement 14 rapporté sur l'extrémité d'un conduit tubulaire 2, 2' (cf. figures 6, 7, 9 et 14).

L'invention concerne également, comme le montrent les figures 1, 2, 5 à 7 et 14, une ligne 15 de circulation fluidique constituée par l'assemblage d'au moins deux conduits tubulaires 2 et 2', caractérisée en ce que ces deux conduits 2 et 2', ou au moins deux parmi lesdits conduits, sont reliés entre eux par un dispositif d'assemblage 1 du type décrit ci-dessus et avantageusement illustré sur les figures.

Enfin, l'invention porte aussi sur un véhicule automobile, notamment à moteur à combustion interne, caractérisé en ce qu'il comprend au moins une ligne de circulation fluidique 15 telle qu'évoquée ci-dessus, pour le transfert de gaz et/ou de liquide.

La description ci-dessus et les dessins annexés divulguent ainsi un dispositif 1 d'assemblage tubulaire ou de connexion flexible qui comprend, dans une configuration de base exemplaire :
- une partie femelle 4 rigide munie d'au moins un clip de verrouillage 7 ;
- une partie mâle rigide 3 munie d'un pion de verrouillage 5.

Le pion 5 de la partie mâle est guidé, lors du mouvement d'assemblage par emboîtement, dans une gorge 8, 8' formée dans la paroi 4' de la partie femelle 4. En bout de course, le pion 5 est emprisonné (position verrouillée du dispositif 1 connecteur) dans un logement 5" avec possibilité de faible débattement axial (selon DA) au moins.

Préférentiellement, la portion d'extrémité ou le connecteur femelle 4 présente les caractéristiques techniques suivantes :
- un diamètre interne sensiblement plus large que la portion d'extrémité ou le connecteur mâle 3 pour insertion de celui-ci avec possibilité de débattement ;
- formation d'un chemin de guidage 5' sur et dans la paroi 4' du connecteur femelle 3 entre le bord libre 4" du connecteur femelle et le logement de réception 5" en position verrouillée du pion 5 telle que le logement de réception 5" du pion 5 est éloigné de l'extrémité opposée du chemin de guidage 5' et décalé angulairement par rapport à l'entrée de ce chemin. Le chemin de guidage peut être en L (mouvement axial puis rotation) ou hélicoïdal (option préférée car minimisation des efforts) ;
- clip de verrouillage 7 qui empêche le déverrouillage du pion 5 (empêche sa sortie du logement 5") ;
- logement de réception 5" oblong pour permettre les débattements axiaux du pion 5.

Préférentiellement, la portion d'extrémité ou le connecteur mâle 3 présente les caractéristiques techniques suivantes :
- une gorge de réception 16 pour un joint d'étanchéité et ce joint 6 ;
- une nervure 12 positionnée à distance du joint 6. Lorsque le dispositif d'assemblage 1 est en position verrouillée, la nervure 12 n'est pas en contact radial avec la face interne de la paroi 4' de la portion femelle 4 du connecteur. Un jeu existe, permettant le rotulage (par exemple rotation autorisée de plus ou moins 3°).

Avantageusement, la découpe de guidage 8' est hélicoïdale (fourniture d'une rampe 18) pour minimiser au maximum les efforts de montage et présente une réduction progressive de largeur. On peut utiliser un outil d'aide pour le montage et prévoir alors sur la paroi 3' de la portion mâle 3, un point d'accroche 13 pour l'outil.

Lors du montage d'une ligne de circulation, deux situations sont possibles :
- la ligne 15 est livrée déjà montée (les conduits 2 et 2' sont déjà assemblés via le dispositif d'assemblage 1 flexible) et la ligne est fixée sur le moteur dans l'usine client ;
- la ligne 15 est livrée démontée et assemblée par l'opérateur sur le moteur. Les conduits 2 et 2' sont fixés respectivement sur leurs zones de fixation, puis le dispositif d'assemblage 1 flexible est verrouillé pour assembler les de conduits 2 et 2'.

On peut évidemment prévoir plusieurs dispositifs d'assemblage 1 formant connecteurs flexibles sur une même ligne 15.

Les parois 3' et 4' des deux portions d'extrémité 3 et 4 peuvent en outre comporter des formations 17 de renforcement structurel (nervure, ailes, surépaisseur).

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention et selon les revendications ci-jointes.

## Revendications

1. Dispositif d'assemblage ou de connexion de deux conduits (2, 2') dont un premier est pourvu d'une portion d'extrémité mâle (3) et le second d'une portion d'extrémité femelle (4),
ces deux portions d'extrémité tubulaires (3 et 4) à section circulaire étant configurées pour s'assembler entre elles par emboîtement avec réalisation simultanée d'une liaison mécanique et d'une étanchéité aux gaz et/ou aux liquides, et avec alignement mutuel selon une direction axiale (DA),
ces deux portions d'extrémité comprenant des premiers moyens respectifs (5, 5', 5") mutuellement coopérants dévolus à l'établissement par translation et rotation d'une liaison mécanique verrouillée et des seconds moyens respectifs (6, 6') mutuellement coopérants dévolus à l'établissement d'une liaison étanche par compression d'au moins un joint (6) contre au moins une surface de contact (6') à l'état verrouillé de la liaison mécanique, et
la portion d'extrémité mâle (3) comportant au moins un pion ou ergot (5) de verrouillage d'un seul tenant avec sa paroi (3') et saillant radialement vers l'extérieur, et la paroi (4') de la portion d'extrémité femelle (4) intégrant un chemin de circulation (5') apte et destiné à guider le ou chaque pion (5), lors du mouvement d'emboîtement, jusqu'à un logement (5") de réception avec verrouillage,
dispositif d'assemblage (1) **caractérisé**
**en ce qu'**une partie (7) élastiquement déformable de la paroi (4') de la portion d'extrémité femelle (4), qui correspond à un segment terminal du chemin (5') de circulation guidée, constitue un organe de blocage du pion (5) dans son logement de réception (5"),
**en ce que** le logement de réception (5") consiste en un ajour dans la paroi (4') de la portion d'extrémité femelle (4), avec une dimension dans la direction axiale (DA) supérieure à celle du pion ou ergot (5), et
**en ce que** le chemin (5') de circulation guidée comprend, depuis le bord libre (4") de la portion d'extrémité femelle (4), un premier segment (8) à extension axiale correspondant à un creusement, à un renfoncement ou à une déformation vers l'extérieur de la paroi (4') de cette portion (4), puis un second segment (8') contigu, sous la forme d'une découpe de ladite paroi délimitant la partie de paroi (7) élastiquement déformable définissant une aile, cette découpe (8') s'étendant transversalement par rapport au premier segment (8) et débouchant dans l'ajour (5") formant le logement de réception avec verrouillage, et l'étanchéité étant réalisée quelle que soit la position axiale du pion (5) dans le logement de réception (5").

2. Dispositif selon la revendication 1, **caractérisé en ce que** le logement de réception (5") du ou de chaque pion (5) présente également une dimension supérieure à celle du pion (5) concerné dans une direction perpendiculaire à la direction axiale (DA).

3. Dispositif selon la revendication 1 ou 2, **caractérisé en ce qu'**au moins une partie (7') de l'aile (7), préférentiellement proche de son extrémité libre, s'étend autour de la direction axiale (DA) ou est située sur un cercle interférant avec le pion (5) considéré, de telle manière qu'elle subit une poussée vers l'extérieur lors du déplacement du pion (5) le long du second segment ou segment terminal (8') du chemin de circulation (5') vers le logement de réception (5"), entraînant une déformation élastique de ladite aile (7).

4. Dispositif selon l'une quelconque des revendications 1 à 3, **caractérisé en ce que** les deux segments (8 et 8') du chemin de circulation guidée sont mutuellement perpendiculaires et forment un L, le second segment (8') formant un arc de cercle.

5. Dispositif selon l'une quelconque des revendications 1 à 3, **caractérisé en ce que** le second segment (8') du chemin de circulation guidée (5') forme un angle (α) inférieur à 90° par rapport à la direction axiale (DA), en constituant préférentiellement un segment de guidage hélicoïdal autour de cette direction axiale (DA).

6. Dispositif selon l'une quelconque des revendications 1 à 5, **caractérisé en ce que** la face interne de la paroi (4') de la portion d'extrémité femelle (4) comprend deux régions consécutives (9, 6') selon la direction axiale (DA), à savoir, d'une part, une région extérieure (9) dont le diamètre est sensiblement identique ou supérieur au diamètre extérieur d'un joint d'étanchéité (6) porté ou formé sur le bord libre (3") de la paroi (3') de la portion d'extrémité mâle (3) et, d'autre part, une région intérieure (6') dont le diamètre est inférieur au diamètre extérieur dudit joint (6) et avec laquelle un contact étanche est réalisé lorsque le bord libre (3") de la paroi (3') de la portion d'extrémité mâle (3) est situé dans cette région intérieure (6'), ces deux régions tubulaires (9, 6') étant séparées par une troisième région annulaire (10) inclinée formant biseau ou tronc de cône.

7. Dispositif selon les revendications 4 et 6, **caractérisé en ce que** les portions d'extrémité mâle (3) et femelle (4) sont configurées de telle manière que le joint d'étanchéité (6) est positionné au niveau de la troisième région annulaire biseautée (10) lorsque le pion (5) est situé à une distance déterminée de l'extrémité du premier segment (8) du chemin de circulation guidée (5') contigüe avec le second segment ou segment terminal (8').

8. Dispositif selon les revendications 5 et 6, **caractérisé en ce que** les portions d'extrémité mâle (3) et femelle (4) sont configurées de telle manière que le joint d'étanchéité (6) est positionné au niveau de la troisième région annulaire biseautée (10) lorsque le pion (5) est situé dans la région angulaire de transition (11) reliant les premier et second segments (8 et 8') du chemin de circulation guidée (5') de la portion d'extrémité femelle (4).

9. Dispositif selon l'une quelconque des revendications 1 à 8, **caractérisé en ce que** la partie de la portion d'extrémité mâle (3) emboîtée dans la portion d'extrémité femelle (4) présente un diamètre extérieur inférieur au diamètre intérieur de cette dernière et comporte une nervure externe (12) déterminant un angle maximum de rotulage entre ces deux portions (3 et 4).

10. Dispositif selon l'une quelconque des revendications 1 à 9, **caractérisé en ce qu'**il comprend un unique ensemble de premiers moyens coopérants pion (5)/logement de réception (5").

11. Dispositif selon l'une quelconque des revendications 1 à 9, **caractérisé en ce qu'**il comprend au moins deux ensembles de premiers moyens coopérants pion (5)/logement de réception (5"), répartis régulièrement autour de la direction axiale (DA).

12. Dispositif selon l'une quelconque des revendications 1 à 11, **caractérisé en ce que** la portion d'extrémité mâle (3) au moins, et éventuellement également la portion d'extrémité femelle (4), comporte au moins un site ou une formation d'accrochage (13) pour un outil de manipulation, en particulier adapté pour un entraînement en rotation autour de la direction axiale (DA).

13. Dispositif selon l'une quelconque des revendications 1 à 12, **caractérisé en ce que** la portion d'extrémité mâle (3) et/ou la portion d'extrémité femelle (4) est (sont) formée(s) d'un seul tenant avec un conduit tubulaire correspondant (2, 2').

14. Dispositif selon l'une quelconque des revendications 1 à 12, **caractérisé en ce que** la portion d'extrémité femelle (4) et/ou la portion d'extrémité mâle (3) fait (font) partie d'au moins un embout de raccordement (14) rapporté sur l'extrémité d'un conduit tubulaire (2, 2').

15. Ligne (15) de circulation fluidique constituée par l'assemblage d'au moins deux conduits tubulaires (2 et 2'), **caractérisée en ce que** ces deux conduits (2 et 2'), ou au moins deux parmi lesdits conduits, sont reliés entre eux par un dispositif d'assemblage (1) selon l'une quelconque des revendications 1 à 14.

16. Véhicule automobile, notamment à moteur à combustion interne, **caractérisé en ce qu'**il comprend au moins une ligne de circulation fluidique (15) selon la revendication 15, pour le transfert de gaz et/ou de liquide.

## Patentansprüche

1. Vorrichtung zum Zusammenfügen oder Verbinden von zwei Leitungen (2, 2'), von denen eine erste mit einem männlichen Endabschnitt (3) und die zweite mit einem weiblichen Endabschnitt (4) versehen ist,
wobei die beiden rohrförmigen Endabschnitte (3 und 4) mit kreisförmigem Querschnitt so konfiguriert sind, dass sie sich durch Ineinanderstecken und gleichzeitige Herstellung einer mechanischen Verbindung und einer Gas-und/oder Flüssigkeitsabdichtung und unter gegenseitiger Ausrichtung in einer axialen Richtung (DA) zusammenfügen,
wobei die beiden Endabschnitte jeweilige erste, miteinander zusammenwirkende Mittel (5, 5', 5"), die dazu bestimmt sind, durch Translation und Rotation eine verriegelte mechanische Verbindung herzustellen, und jeweilige zweite, miteinander zusammenwirkende Mittel (6, 6'), die dazu bestimmt sind, eine dichte Verbindung herzustellen, indem mindestens eine Dichtung (6) im verriegelten Zustand der mechanischen Verbindung gegen mindestens eine Kontaktfläche (6') gepresst wird, umfassen und
wobei der männliche Endabschnitt (3) mindestens einen Verriegelungsstift oder -nocken (5) aufweist, der einstückig mit seiner Wand (3') ausgebildet ist und radial nach außen vorsteht, und wobei die Wand (4') des weiblichen Endabschnitts (4) einen Umlaufweg (5') integriert, der dazu geeignet und bestimmt ist, den bzw. jeden Stift (5) bei der Einsteckbewegung bis zu einer Aufnahme (5") mit Verriegelung zu führen,
wobei die Verbindungsvorrichtung (1) **dadurch gekennzeichnet ist,**
**dass** ein elastisch verformbarer Teil (7) der Wand (4') des weiblichen Endabschnitts (4), der einem Endsegment des Umlaufführungswegs (5') entspricht, ein Organ zum Blockieren des Stifts (5) in seiner Aufnahme (5") bildet,
**dass** die Aufnahme (5") aus einem Durchbruch in der Wand (4') des weiblichen Endabschnitts (4) besteht, dessen Abmessung in der axialen Richtung (DA) größer als die des Stifts bzw. Nockens (5) ist, und
**dass** der Umlaufführungsweg (5') ausgehend vom freien Rand (4") des weiblichen Endabschnitts (4) ein erstes Segment (8) mit axialer Erstreckung umfasst, das einer Aushöhlung, einer Vertiefung oder einer Verformung der Wand (4') dieses Abschnitts (4) nach außen entspricht, und dann ein angrenzendes zweites Segment (8') in Form eines Ausschnitts aus der Wand, der den elastisch verformbaren, einen Flügel definierenden Teil der Wand (7) begrenzt, wobei sich der Ausschnitt (8') quer zum ersten Segment (8) erstreckt und in den Durchbruch (5") mündet, der die Aufnahme mit Verriegelung bildet, und wobei die Abdichtung unabhängig von der axialen Position des Stifts (5) in der Aufnahme (5") erfolgt.

2. Vorrichtung nach Anspruch 1, **dadurch gekennzeichnet, dass** die Aufnahme (5") des bzw. jedes Stifts (5) außerdem in einer zur axialen Richtung (DA) senkrechten Richtung eine Abmessung aufweist, die größer als die des betreffenden Stifts (5) ist.

3. Vorrichtung nach Anspruch 1 oder 2, **dadurch gekennzeichnet, dass** sich mindestens ein Teil (7') des Flügels (7), vorzugsweise nahe seinem freie Ende, um die axiale Richtung (DA) erstreckt oder auf einem Kreis liegt, der mit dem betreffenden Stift (5) interferiert, so dass er bei einer Bewegung des Stifts (5) entlang des zweiten Segments oder Endsegments (8') des Umlaufwegs (5') in Richtung der Aufnahme (5") nach außen gedrückt wird, was zu einer elastischen Verformung des Flügels (7) führt.

4. Vorrichtung nach einem der Ansprüche 1 bis 3, **dadurch gekennzeichnet, dass** die beiden Segmente (8 und 8') des Umlaufführungswegs senkrecht zueinander sind und ein L bilden, wobei das zweite Segment (8') einen Kreisbogen bildet.

5. Vorrichtung nach einem der Ansprüche 1 bis 3, **dadurch gekennzeichnet, dass** das zweite Segment (8') des Umlaufführungswegs (5') einen Winkel (α) von weniger als 90° zur axialen Richtung (DA) bildet, wobei es vorzugsweise ein schraubenförmiges Führungssegment um diese axiale Richtung (DA) bildet.

6. Vorrichtung nach einem der Ansprüche 1 bis 5, **dadurch gekennzeichnet, dass** die Innenseite der Wand (4') des weiblichen Endabschnitts (4) zwei aufeinanderfolgende Bereiche (9, 6') entlang der axialen Richtung (DA) umfasst, und zwar einerseits einen äußeren Bereich (9), dessen Durchmesser im Wesentlichen so groß wie oder größer als der Außendurchmesser einer Dichtung (6) ist, die an der freien Kante (3") der Wand (3') des männlichen Endabschnitts (3) angeordnet oder ausgebildet ist, und andererseits einen inneren Bereich (6'), dessen Durchmesser kleiner als der Außendurchmesser der Dichtung (6) ist und mit dem ein dichter Kontakt hergestellt wird, wenn sich die freie Kante (3") der Wand (3') des männlichen Endabschnitts (3) in diesem inneren Bereich (6') befindet, wobei die beiden rohrförmigen Bereiche (9, 6') durch einen geneigten dritten ringförmigen Bereich (10), der eine Abschrägung oder einen Kegelstumpf bildet, getrennt sind.

7. Vorrichtung nach Anspruch 4 und 6, **dadurch gekennzeichnet, dass** der männliche Endabschnitt (3) und der weibliche Endabschnitt (4) so konfiguriert sind, dass die Dichtung (6) am abgeschrägten dritten ringförmigen Bereich (10) positioniert ist, wenn sich der Stift (5) in einem bestimmten Abstand zum ersten Segment (8) des Umlaufführungswegs (5'), das an das zweite Segment oder das Endsegment (8') angrenzt, befindet.

8. Vorrichtung nach Anspruch 5 und 6, **dadurch gekennzeichnet, dass** der männliche Endabschnitt (3) und der weibliche Endabschnitt (4) so konfiguriert sind, dass die Dichtung (6) am abgeschrägten dritten rohrförmigen Bereich (10) positioniert ist, wenn sich der Stift (5) im Übergangswinkelbereich (11) befindet, der das erste und das zweite Segment (8 und 8') des Umlaufführungswegs (5') des weiblichen Endabschnitts (4) miteinander verbindet.

9. Vorrichtung nach einem der Ansprüche 1 bis 8, **dadurch gekennzeichnet, dass** der Teil des männlichen Endabschnitts (3), der in den weiblichen Endabschnitt (4) eingesteckt ist, einen Außendurchmesser aufweist, der kleiner als der Innendurchmesser des letzteren ist, und eine äußere Rippe (12) aufweist, die einen maximalen Knickwinkel zwischen diesen beiden Abschnitten (3 und 4) bestimmt.

10. Vorrichtung nach einem der Ansprüche 1 bis 9, **dadurch gekennzeichnet, dass** sie eine einzige Baugruppe zusammenwirkender erster Mittel aus Stift (5) und Aufnahme (5") umfasst.

11. Vorrichtung nach einem der Ansprüche 1 bis 9, **dadurch gekennzeichnet, dass** sie mindestens zwei Baugruppen zusammenwirkender erster Mittel aus Stift (5) und Aufnahme (5") umfasst, die gleichmäßig um die axiale Richtung (DA) verteilt sind.

12. Vorrichtung nach einem der Ansprüche 1 bis 11, **dadurch gekennzeichnet, dass** zumindest der männliche Endabschnitt (3) und gegebenenfalls auch der weibliche Endabschnitt (4) mindestens eine Einhakstelle oder -formation (13) für ein Handhabungswerkzeug aufweist (aufweisen), die insbesondere zum Drehen um die axiale Richtung (DA) geeignet ist.

13. Vorrichtung nach einem der Ansprüche 1 bis 12, **dadurch gekennzeichnet, dass** der männliche Endabschnitt (3) und/oder der weibliche Endabschnitt (4) einstückig mit einer entsprechenden rohrförmigen Leitung (2, 2') ausgebildet ist (sind).

14. Vorrichtung nach einem der Ansprüche 1 bis 12, **dadurch gekennzeichnet, dass** der weibliche Endabschnitt (4) und/oder der männliche Endabschnitt (3) Teil mindestens eines Verbindungsstutzens (14) ist (sind), der an das Ende einer rohrförmigen Leitung (2, 2') angesetzt ist.

15. Fluidzirkulationsleitung (15), die durch das Zusammenfügen von mindestens zwei rohrförmigen Leitungen (2 und 2') gebildet ist, **dadurch gekennzeichnet, dass** die beiden Leitungen (2 und 2') oder mindestens zwei der Leitungen durch eine Verbindungsvorrichtung (1) nach einem der Ansprüche 1 bis 14 miteinander verbunden sind.

16. Kraftfahrzeug, insbesondere mit Verbrennungsmotor, **dadurch gekennzeichnet, dass** es mindestens eine Fluidzirkulationsleitung (15) nach Anspruch 15 zur Übertragung von Gas und/oder Flüssigkeit umfasst.

## Claims

1. Device for joining or connecting two pipes (2, 2'), a first of which is provided with a male end portion (3) and the second of which is provided with a female end portion (4),
these two tubular end portions (3 and 4), having a circular section, being configured to be joined together by interlocking with the simultaneous creation of a mechanical connection and gas- and/or liquid-tightness, and with mutual alignment along an axial direction (DA), these two end portions comprising respective first means (5, 5', 5") that cooperate with one another and are intended for the establishment, by translation and rotation, of a locked mechanical connection, and respective second means (6, 6') that cooperate with one another and are intended for the establishment of a sealed connection by compression of at least one seal (6) against at least one contact surface (6') in the locked state of the mechanical connection, and
the male end portion (3) having at least one locking pin or stud (5) in one piece with its wall (3') and protruding radially towards the outside, and the wall (4') of the female end portion (4) incorporating a circulation path (5') that is able and intended to guide the or each pin (5), during the interlocking movement, as far as a locking receiving housing (5"),
the joining device (1) being **characterized in that** an elastically deformable part (7) of the wall (4') of the female end portion (4), which corresponds to a terminal segment of the guided circulation path (5'), constitutes a member for immobilizing the pin (5) in its receiving housing (5")
**in that** the receiving housing (5") consists of an aperture in the wall (4') of the female end portion (4), with a dimension in the axial direction (DA) greater than that of the pin or stud (5), and
**in that** the guided circulation path (5') comprises, from the free edge (4") of the female end portion (4), a first axially extending segment (8) corresponding to a recess, to an indentation or to an outward deformation of the wall (4') of this portion (4), and then a second, contiguous segment (8') in the form of a cutout in said wall delimiting the elastically deformable wall part (7) defining a wing, this cutout (8') extending transversely with respect to the first segment (8) and opening into the aperture (5") forming the locking receiving housing, and the sealing being realized regardless of the axial position of the pin (5) in the receiving housing (5").

2. Device according to Claim 1, **characterized in that** the receiving housing (5") for the or each pin (5) also has a dimension larger than that of the pin (5) in question in a direction perpendicular to the axial direction (DA).

3. Device according to Claim 1 or 2, **characterized in that** at least a part (7') of the wing (7), preferably close to its free end, extends about the axial direction (DA) or is situated on a circle interfering with the pin (5) in question, such that it is subjected to an outward push during the movement of the pin (5) along the second segment or terminal segment (8') of the circulation path (5') towards the receiving housing (5"), bringing about elastic deformation of said wing (7).

4. Device according to any one of Claims 1 to 3, **characterized in that** the two segments (8 and 8') of the guided circulation path are mutually perpendicular and form an L, the second segment (8') forming a circular arc.

5. Device according to any one of Claims 1 to 3, **characterized in that** the second segment (8') of the guided circulation path (5') forms an angle (α) of less than 90° with respect to the axial direction (DA), preferably constituting a helical guide segment about this axial direction (DA).

6. Device according to any one of Claims 1 to 5, **characterized in that** the internal face of the wall (4') of the female end portion (4) comprises two consecutive regions (9, 6') along the axial direction (DA), namely, for the one part, an outer region (9) which has a diameter substantially identical to or larger than the outside diameter of a seal (6) carried or formed on the free edge (3") of the wall (3') of the male end portion (3) and, for the other part, an inner region (6") which has a diameter smaller than the outside diameter of said seal (6) and with which sealing contact is realized when the free edge (3") of the wall (3') of the male end portion (3) is situated in this inner region (6'), these two tubular regions (9, 6') being separated by an inclined annular third region (10) forming a bevel or cone frustum.

7. Device according to Claims 4 and 6, **characterized in that** the male end portion (3) and female end portion (4) are configured such that the seal (6) is positioned in the bevelled annular third region (10) when the pin (5) is situated at a given distance from that end of the first segment (8) of the guided circulation path (5') that is contiguous with the second segment or terminal segment (8').

8. Device according to Claims 5 and 6, **characterized in that** the male end portion (3) and female end portion (4) are configured such that the seal (6) is positioned in the bevelled annular third region (10) when the pin (5) is situated in the angular transition region (11) connecting the first and second segments (8 and 8') of the guided circulation path (5') of the female end portion (4).

9. Device according to any one of Claims 1 to 8, **characterized in that** the part of the male end portion (3) that is interlocked with the female end portion (4) has an outside diameter smaller than the inside diameter of the latter and has an external rib (12) that determines a maximum swivelling angle between these two portions (3 and 4).

10. Device according to any one of Claims 1 to 9, **characterized in that** it comprises a single set of first cooperating pin (5)/receiving housing (5") means.

11. Device according to any one of Claims 1 to 9, **characterized in that** it comprises at least two sets of first cooperating pin (5)/receiving housing (5") means, distributed regularly about the axial direction (DA).

12. Device according to any one of Claims 1 to 11, **characterized in that** at least the male end portion (3), and optionally also the female end portion (4), has at least one coupling site or formation (13) for a manipulation tool, in particular suitable for driving in rotation about the axial direction (DA).

13. Device according to any one of Claims 1 to 12, **characterized in that** the male end portion (3) and/or the female end portion (4) is/are formed in one piece with a corresponding tubular pipe (2, 2').

14. Device according to any one of Claims 1 to 12, **characterized in that** the female end portion (4) and/or the male end portion (3) is/are part of at least one connecting end piece (14) attached to the end of a tubular pipe (2, 2').

15. Fluid circulation line (15) formed by the joining of at least two tubular pipes (2 and 2'), **characterized in that** these two pipes (2 and 2'), or at least two of said pipes, are connected together by a joining device (1) according to any one of Claims 1 to 14.

16. Motor vehicle, in particular having an internal combustion engine, **characterized in that** it comprises at least one fluid circulation line (15) according to Claim 15 for transferring gas and/or liquid.
